# EUROPEAN PATENT APPLICATION

(11) **EP 4 579 894 A1**
(43) Date of publication of application: **02.07.2025**
(21) Application number: 23876822.0
(22) Date of filing: 13.10.2023
(51) Int. Cl.: H01M 50/107, H01M 50/533, H01M 50/536, H01M 50/538

(54) **SECONDARY BATTERY AND ELECTRONIC DEVICE**

(30) Priority: 14.10.2022 CN 202211257888
(71) Applicant: Ningde Amperex Technology Limited, Ningde, Fujian 352100 (CN)
(72) Inventor: QIU, Shenzhao, Ningde, Fujian 352100 (CN)
(74) Representative: Icosa
(86) International application number: PCT/CN2023/124561
(87) International publication number: WO 2024/078623

(57) **Abstract**

This application discloses a secondary battery and an electronic device. The secondary battery includes a housing, an electrode assembly, and a current collector plate. The current collector plate is electrically connected to the electrode assembly. The bottom of the housing includes a main body zone and a thinned zone connecting to the main body zone, and the thinned zone is electrically connected to the current collector plate. Area of the thinned zone accounts for 2% to 30% of total area of the bottom of the housing. In this application, the thinned zone is provided in a middle zone of the bottom of the housing and connects to the current collector plate via laser welding, so that the thinned zone can significantly reduce welding power during welding at the bottom, broadening a welding window and effectively improving welding yield at the bottom of the battery. In addition, the technical solution disclosed in this application has wide applicability and can be applied to housings of various sizes and thicknesses, all of which can implement a high welding yield.

## Description

### TECHNICAL FIELD

This application relates to the field of battery technologies, and in particular, to a secondary battery and an electronic device.

### BACKGROUND

In a current secondary battery structure, a structure with tabs on two terminals is commonly used, where the tabs are welded to a current collector and then are connected to the bottom of a housing via resistance welding or laser welding.

In conventional steel-shell batteries, the battery housing is designed to be thick to ensure impact resistance of the battery. However, this results in the need for higher welding power when the laser passes through the steel shell to weld to the current collector plate or the tabs during the laser welding process at the bottom. As the welding power increases, the fluctuation of laser accuracy also increases, resulting in a small welding window. During a production process of the battery structure, the problems such as deformation, cracks, and perforation frequently occur at the bottom of the battery, leading to low welding yield.

### SUMMARY

Some embodiments of this application provide a secondary battery and an electronic device, which can solve problems such as deformation, cracks, and perforation at the bottom of the battery caused by an increase in welding power during laser welding, helping improve a welding yield at the bottom of the battery and also enhancing reliability welding of the bottom of the battery.

According to a first aspect, this application provides a secondary battery. The secondary battery includes a housing, an electrode assembly, and a current collector plate. The current collector plate is electrically connected to the electrode assembly. The bottom of the housing includes a main body zone and a thinned zone connecting to the main body zone, that is, the thinned zone is provided at the bottom of the housing, where the thinned zone is electrically connected to the current collector plate, and area of the thinned zone accounts for 2% to 30% of total area of the bottom of the housing. The area of the thinned zone refers to a projection area of the thinned zone at the bottom of the housing in a direction perpendicular to the main body zone. Providing the thinned zone with a certain area at the bottom of the housing is conducive to reducing welding power at the bottom of the housing during welding, thereby broadening the welding window. On one hand, if a proportion of the area of the thinned zone in the total area of the bottom of the housing is excessively small, because the thinned zone is suitable for lowering the welding power during welding at the bottom of the battery, the welding area at the bottom of the housing is insufficient, and welding may be applied to a non-thinned zone (a zone of the bottom of the housing other than the thinned zone) during laser welding, resulting in a significant decrease in welding yield. This is because the non-thinned zone requires higher welding power, and the higher welding power leads to a decrease in welding accuracy. On the other hand, if the area of the thinned zone is excessively large, strength of the bottom of the housing is weakened, and gas generation in the battery after electrical connection may cause bulging and deformation at the bottom of the housing, affecting the welding yield.

In some embodiments, the area of the thinned zone accounts for 4% to 15% of the total area of the bottom of the housing. Further controlling the proportion of the area of the thinned zone in the total area of the bottom of the housing within the range of 4% to 15% is conducive to further improving the welding yield and enhancing the welding reliability.

In some embodiments, a ratio of the thickness of the thinned zone to the thickness of the main body zone is 30% to 80%. Controlling the ratio of the thickness of the thinned zone to the thickness of the main body zone within an appropriate range is conducive to improving the welding yield. If the ratio of the thickness of the thinned zone to the thickness of the main body zone is excessively small, overall strength of the bottom of the housing is weakened, and gas generation in the battery after electrical connection may cause bulging or even deformation at the bottom of the housing. If the ratio of the thickness of the thinned zone to the thickness of the main body zone is excessively large, the welding power during welding at the bottom increases, and high welding power leads to cracks at the bottom of the housing.

In some embodiments, the ratio of the thickness of the thinned zone to the thickness of the main body zone is 40% to 70%. Further controlling the ratio of the thickness of the thinned zone to the thickness of the main body zone within the range of 40% to 70% is conducive to further improving the welding yield and preventing cracks at the bottom of the housing.

In some embodiments, an outer surface of the bottom of the housing is recessed in a direction facing the current collector plate to form the thinned zone. In some other embodiments, an inner surface of the bottom of the housing is recessed in a direction facing away from the current collector plate to form the thinned zone. In other embodiments, the outer surface of the bottom of the housing is recessed in a direction facing the current collector plate, while the inner surface of the bottom of the housing is recessed in a direction facing away from the current collector plate, so as to form the thinned zone. It can be seen that the thinned zone as described in this application can be formed by thinning one side of the outer surface, one side of the inner surface, or both sides of the outer and inner surfaces of the bottom of the housing.

In some embodiments, a boss is provided at one end of the current collector plate facing the bottom of the housing, and the boss fits to the thinned zone. Further, an end surface of a convex end of the boss fits to one side surface of the thinned zone.

Fitting arrangement refers to that no gap or almost no gap is present after the end surface of the convex end of the boss fits to the side surface of the thinned zone, that is, fitting arrangement or fitting as described in this application. This can prevent a large gap between the thinned zone and the current collector plate, thereby avoiding perforation during welding at the bottom of the housing. This helps improve the welding yield at the bottom of the battery, and also enhances the welding reliability.

In some embodiments, the boss concentrically fits to the thinned zone. Further, the end surface of the convex end of the boss concentrically fits to one side surface of the thinned zone. Concentric fitting is used for preventing welding perforation during welding, further improving the welding yield at the bottom of the battery and further enhancing the welding reliability.

In some embodiments, in an axial direction of the secondary battery, a projection area of the convex end of the boss is smaller than the projection area of the thinned zone.

In some embodiments, a ratio of the projection area of the convex end of the boss to the projection area of the thinned zone is 0.6:1 to 0.98:1. This helps to further improve the welding yield at the bottom of the battery.

In some embodiments, the thickness of the main body zone is T₁, the thickness of the thinned zone is T₂, and thickness of the boss is T₀, satisfying T₀ ≥ (T₁ - T₂).

In some embodiments, the thickness of the main body zone is T₁, the thickness of the thinned zone is T₂, and the thickness of the boss is T₀, satisfying 1.0 ≤ T₀/(T₁ - T₂) ≤ 1.3. Controlling the thickness of the boss to be greater than a difference between the thickness of the main body zone and the thickness of the thinned zone and adjusting the ratio of the thickness T₀ of the boss to the difference between the thickness T₁ of the main body zone and the thickness T₂ of the thinned zone within a specified range are conducive to optimizing the welding yield at the bottom of the battery and further enhancing the welding reliability at the bottom of the battery.

In some embodiments, the end surface of the convex end of the boss has the same shape as the thinned zone and fits to the thinned zone. This is conducive to better controlling the gap between the boss and the thinned zone, thereby further improving the welding yield at the bottom of the battery.

It should be noted that provision of the boss is applicable to three cases of the recess at the bottom of the housing: the outer surface of the bottom of the housing is recessed in a direction facing the current collector plate to form the thinned zone, and/or the inner surface of the bottom of the housing is recessed in a direction facing away from the current collector plate to form the thinned zone.

In some embodiments, the secondary battery includes an electrode plate. The electrode plate has a bare foil zone at one end along the axial direction of the secondary battery. The flattened surface obtained by flattening the bare foil zone is electrically connected to the current collector plate.

The electrode plate may be a positive electrode plate or a negative electrode plate. In some embodiments of this application, the electrode plate is a positive electrode plate, and the positive electrode plate has a bare foil zone provided at one end portion along the axial direction of the secondary battery. A flattened surface obtained by flattening the bare foil zone is electrically connected to a positive electrode current collector plate. Alternatively, in some other embodiments of this application, the electrode plate is a negative electrode plate, and the negative electrode plate has a bare foil zone provided at one end portion along the axial direction of the secondary battery. The flattened surface obtained by flattening the bare foil zone is electrically connected to a negative electrode current collector plate. The positive electrode current collector plate or the negative electrode current collector plate is electrically connected to the thinned zone.

In some embodiments, the secondary battery is a cylindrical secondary battery, and the cylindrical secondary battery further includes a jelly roll, where the jelly roll includes the foregoing electrode plate.

A structure of a battery cell with a full-tab structure jelly roll is used in this application to improve the temperature rise problem during high-rate discharge. The full-tab structure jelly roll is further a full-tab jelly roll. Specifically, a positive electrode slurry is applied on surface of a positive current collector (such as aluminum foil) to form a positive electrode plate, and one end of the positive electrode plate is provided with a bare aluminum foil zone. A negative electrode slurry is applied on the surface of a negative current collector (such as copper foil) to form a negative electrode plate, and one end of the negative electrode plate has a bare copper foil. A separator is further provided between the positive electrode plate and the negative electrode plate. The positive electrode plate, the separator, and the negative electrode plate are stacked and wound to form the full-tab jelly roll. The bare aluminum foil zone and the bare copper foil zone are respectively provided at two ends of the full-tab jelly roll. The bare aluminum foil zone and the bare copper foil zone are respectively flattened using a flattening device to form flattened surfaces. The flattened surface obtained by flattening the bare aluminum foil zone is electrically connected to the positive electrode current collector plate, and the flattened surface obtained by flattening the bare copper foil zone is electrically connected to the negative electrode current collector plate. The positive electrode current collector plate or the negative electrode current collector plate is then electrically connected to the thinned zone.

According to a second aspect, this application provides an electronic device, where the electronic device includes the foregoing secondary battery.

The beneficial effects brought by the technical solutions provided in some embodiments of this application include at least the following:
(1) In this application, the thinned zone is provided at the bottom of the housing, where the thinned zone is used for welding at the bottom of the housing, with the area of the thinned zone accounting for 2% to 30% of the total area of the bottom of the housing, which is conducive to reducing the welding power during welding, broadening the welding window, and improving the welding yield at the bottom of the battery.
(2) In this application, the boss is provided at one end of the current collector plate facing the thinned zone, where the end surface of the convex end of the boss fits to the thinned zone, which can prevent the large gap between the current collector plate and the thinned zone, thereby improving the welding yield. In addition, adjusting the projection area of the convex end of the boss in the axial direction of the battery and the thickness range of the boss is conducive to further improving the welding yield at the bottom of the battery.
(3) In this application, the full-tab jelly roll is used, where the flattened surface obtained by flattening the bare foil zone at the end of the full-tab jelly roll is electrically connected to the current collector plate, which is conducive to reducing safety risks such as internal overheating of the battery.

### BRIEF DESCRIPTION OF DRAWINGS

To describe the technical solutions in some embodiments of this application or in the prior art more clearly, the following briefly describes the accompanying drawings required for describing some embodiments or the prior art. Apparently, the accompanying drawings in the following description show merely some embodiments of this application, and persons skilled in the art may still derive other drawings from these accompanying drawings without creative efforts.
FIG. 1 is a cross-sectional view of a secondary battery according to an embodiment of this application;
FIG. 2 is a partially enlarged view of the bottom of a secondary battery according to an embodiment of this application;
FIG. 3 is a partial cross-sectional view of the bottom of a secondary battery according to an embodiment of this application;
FIG. 4 is a partial cross-sectional view of the bottom of a secondary battery according to another embodiment of this application;
FIG. 5 is a schematic diagram of the bottom of a secondary battery according to an embodiment of this application;
FIG. 6 is a schematic diagram of the bottom of a secondary battery according to another embodiment of this application;
FIG. 7 is a schematic diagram of the bottom of a secondary battery according to still another embodiment of this application;
FIG. 8 is a schematic diagram of welding at the bottom of a secondary battery according to an embodiment of this application; and
FIG. 9 is a schematic diagram of welding at the bottom of a secondary battery according to another embodiment of this application.

Reference signs in the figure: 11. housing; 12. jelly roll; 13. positive electrode current collector plate; 14. negative electrode current collector plate; 110. bottom of housing; 1101. thinned zone; 1102. main body zone; and 140. boss.

### DESCRIPTION OF EMBODIMENTS

To make the objectives, technical solutions, and advantages of this application more comprehensible, the following describes this application in detail with reference to accompanying drawings and some embodiments. It should be understood that the specific embodiments described herein are merely used to explain this application but are not intended to limit this application.

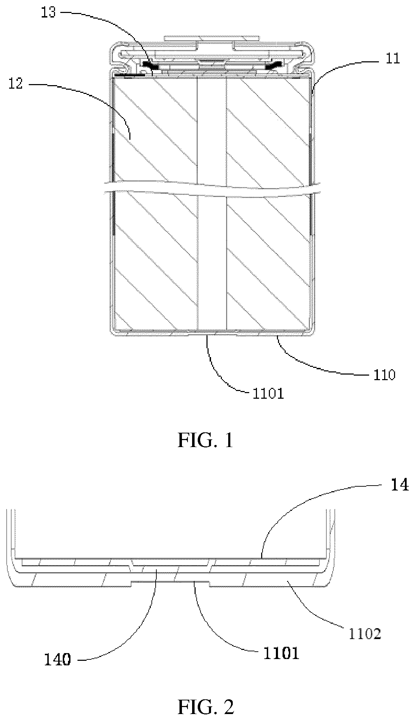

Referring to FIG. 1 and FIG. 2, a first implementation of the secondary battery according to this application includes a housing 11. A jelly roll 12 is accommodated in the housing 11, where the jelly roll 12 is a jelly roll formed by winding a positive electrode plate, a negative electrode plate, and a separator. The positive electrode plate is provided with a first bare foil zone, and the negative electrode plate is provided with a second bare foil zone. The first bare foil zone and the second bare foil zone are respectively arranged at two ends of the jelly roll 12. After flattened, the first bare foil zone and the second bare foil zone form a first flattened surface and a second flattened surface, where the first flattened surface and the second flattened surface are electrically connected to the positive electrode current collector plate 13 and the negative electrode current collector plate 14, respectively.

In some embodiments of the first implementation of this application, the positive electrode current collector plate 13 is located at the upper end of the housing 11, and the negative electrode current collector plate 14 is located at the lower end of the housing 11. A lower end portion of the housing 11 is the bottom 110 of the housing, where the bottom 110 of the housing includes a thinned zone 1101 and a main body zone 1102. The thinned zone 1101 is provided in the middle of the bottom 110 of the housing, and the main body zone 1102 refers to a zone of the bottom 110 of the housing other than the thinned zone 1101. The main body zone 1102 surrounds the periphery of the thinned zone 1101 and is connected to the thinned zone. The thinned zone 1101 is integrally formed on the bottom 110 of the housing, and the thinned zone 1101 is electrically connected to the negative electrode current collector plate 14 by laser welding (such as penetration welding).

In some other embodiments of the first implementation of this application, the positive electrode current collector plate 13 is located at the lower end of the housing 11, and the thinned zone 1101 is provided in the middle of the bottom 110 of the housing. The thinned zone 1101 is electrically connected to the positive electrode current collector plate 13 by laser welding (such as penetration welding).

In some other embodiments of this application, the thinned zone 1101 may alternatively be non-integrally formed on the bottom 110 of the housing, as long as it can reduce the welding power and broaden the welding window. This is not limited in this application.

In this application, the thinned zone 1101 and the main body zone 1102 connecting to the thinned zone 1101 are provided at the bottom 110 of the housing, and thickness of the thinned zone 1101 is controlled to be smaller than thickness of the main body zone 1102, during a welding process of the bottom of the housing, laser welding is performed at the position of the thinned zone 1101 to achieve a fixed electrical connection between the bottom 110 of the housing and the positive electrode current collector plate 13 or the negative electrode current collector plate 14. Providing the thinned zone 1101 can effectively reduce the welding power during welding at the bottom 110 of the housing, broadening the welding window and improving the welding yield.

It should be noted that in this application, the thinned zone 1101 is formed by thinning the initial thickness of the bottom 110 of the housing. A thinned zone is the thinned zone 1101, and a non-thinned zone is the main body zone 1102. Therefore, the thickness of the thinned zone 1101 is definitely smaller than the initial thickness of the bottom 110 of the housing. In addition, a thickness direction of the thinned zone 1101 is perpendicular to the bottom surface of the housing 11, and a thickness direction of the main body zone 1102 is parallel to the thickness direction of the thinned zone 1101.

In some example embodiments, area of the thinned zone 1101 accounts for 2% to 30% of total area of the bottom 110 of the housing. The total area of the bottom 110 of the housing includes a sum of area of the main body zone 1102 and area of the thinned zone 1101 (referred to as area of the bottom of the housing). Controlling the proportion of the area of the thinned zone in the area of the bottom of the housing within an appropriate range is conducive to improving the welding yield during welding at the bottom of the battery. For example, if the proportion of the area of the thinned zone in the area of the bottom of the housing is excessively small (for example, being less than 2% of the area of the bottom of the housing), since the thinned zone is suitable for reducing the welding power during welding at the bottom of the battery, an excessively small area of the thinned zone leads to insufficient welding area of the bottom of the housing, so that the welding may be performed onto a non-thinned zone (a zone of the bottom of the housing other than the thinned zone), and the laser welding may not penetrate the bottom of the housing, leading to poor welding, thus leading to a significant decrease in welding yield and reliability. In addition, if the area of the thinned zone is excessively large, the strength of the bottom of the housing is weakened, and gas generation in the battery after electrical connection may cause bulging and deformation at the bottom of the housing, affecting the welding yield.

For example, the proportion of the area of the thinned zone 1101 in the total area of the bottom 110 of the housing is within a range defined by any two values of 2%, 5%, 8%, 10%, 15%, 20%, 25%, and 30%.

In some example embodiments, the area of the thinned zone 1101 accounts for 4% to 15% of the total area of the bottom 110 of the housing.

For example, the proportion of the area of the thinned zone 1101 in the total area of the bottom 110 of the housing is within a range defined by any two values of 4%, 6%, 8%, 10%, 12%, 14%, and 15%. In this case, further controlling the proportion of the area of the thinned zone in the total area of the bottom of the housing within the range of 4% to 15% is conducive to improving the welding yield and enhancing the welding reliability.

In some example embodiments, a ratio of the thickness of the thinned zone 1101 to the thickness of the main body zone 1102 is 30% to 80%. Controlling the ratio of the thickness of the thinned zone 1101 to the thickness of the main body zone 1102 within an appropriate range is conducive to further improving the welding yield. Specifically, if the ratio of the thickness of the thinned zone 1101 to the thickness of the main body zone 1102 is excessively small (for example, being less than 30%), that is, the thickness of the thinned zone 1101 is excessively thin compared to the thickness of the main body zone 1102, the overall strength of the bottom of the housing is weakened, and gas generation after electrical connection of the battery may cause bulging or even deformation of the bottom of the housing. If the ratio of the thickness of the thinned zone 1101 to the thickness of the main body zone 1102 is excessively large (for example, being greater than 80%), the thinning effect on the bottom of the housing is insignificant, and the welding power during welding at the bottom increases. High welding power leads to cracks at the bottom of the housing. This is because the current collector plate and the bottom of the housing are different in material and melt point, higher power leads to a larger proportion of material segregation into the molten pool, resulting in immiscibility of the two elements after cooled and larger cracks. It can be seen that the excessively large or small ratio of the thickness of the thinned zone to the thickness of the bottom of the housing is not conducive to improving the welding yield. For example, the ratio of the thickness of the thinned zone 1101 to the thickness of the bottom 110 of the housing is within a range defined by any two values of 30%, 40%, 50%, 60%, 70%, and 80%.

In some example embodiments, the ratio of the thickness of the thinned zone 1101 to the thickness of the main body zone 1102 is 40% to 70%. Further controlling the ratio of the thickness of the thinned zone 1101 to the thickness of the main body zone 1102 within the range of 40% to 70% is conducive to further improving the welding yield and preventing cracks at the bottom of the housing.

For example, the ratio of the thickness of the thinned zone 1101 to the thickness of the main body zone 1102 is within a range defined by any two values of 40%, 45%, 50%, 55%, 60%, 65%, and 70%.

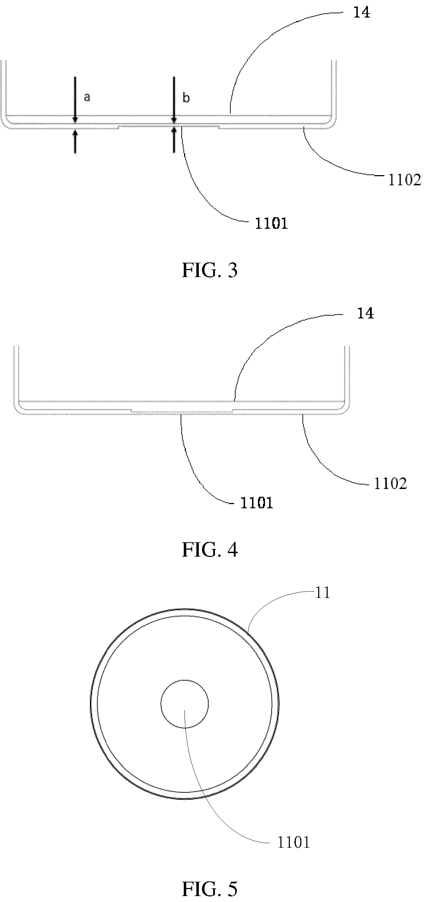

Referring to FIG. 3, an implementation of this application is shown. An outer surface of the bottom 110 of the housing is recessed in a direction facing the negative electrode current collector plate 14 to form the thinned zone 1101. The distance shown as b in FIG. 3 indicates the thickness of the thinned zone 1101, and the distance shown as a indicates the thickness of the main body zone 1102. The outer surface of the bottom 110 of the housing is thinned, so that the outer surface is recessed to form the thinned zone 1101, where the thinned zone 1101 is integrally formed with the bottom 110 of the housing.

The thinned zone 1101 may alternatively be non-integrally formed on the bottom 110 of the housing. The material of the thinned zone 1101 may be the same as or different from the material of the housing, as long as it can reduce the welding power at the bottom, improve the welding yield at the bottom, and enhance the welding reliability. This is not limited in this application. Referring to FIG. 2, a boss 140 is provided at one end portion of the negative electrode current collector plate 14 facing the bottom 110 of the housing 11. The boss 140 fits to the thinned zone 1101. Further, an end surface of a convex end of the boss 140 fits to one side surface of the thinned zone 1101. The boss 140 is provided at one end of the negative electrode current collector plate 14, where the convex end of the boss 140 extends toward the thinned zone 1101 and the end surface of the convex end fits to the outer surface of the thinned zone 1101, which can prevent a large gap between the thinned zone 1101 and the negative electrode current collector plate 14, thereby preventing perforation during welding at the bottom of the housing, facilitating improving the welding yield at the bottom of the battery and enhancing welding reliability.

It should be noted that in other example embodiments of this application, the electrical connection between the positive electrode current collector plate and the thinned zone can be achieved via laser welding. In this case, a boss 140 is provided at one end portion of the positive electrode current collector plate facing the bottom 110 of the housing 11. The end surface of the convex end of the boss 140 fits to one side surface of the thinned zone 1101.

In some example embodiments, the end surface of the convex end of the boss 140 concentrically fits to one side surface of the thinned zone 1101. The end surface of the convex end of the boss 140 is controlled to concentrically fit with the outer surface of the thinned zone 1101. Since the welding is performed at the center of the bottom 110 of the housing 11, the thinned zone 1101 and the boss 140 being concentrically disposed helps to avoid perforation during welding, thereby improving the welding yield at the bottom of the battery and enhancing the welding reliability.

In some example embodiments, in the axial direction of the secondary battery, a projection area of the convex end of the boss 140 is smaller than a projection area of the thinned zone 1101, and a ratio of the projection area of the convex end of the boss 140 to the projection area of the thinned zone 1101 is 0.6:1 to 0.98:1.

If the projection area of the convex end of the boss 140 is excessively small (for example, the ratio to the projection area of the thinned zone 1101 is less than 0.6:1), it is prone to welding perforation. This is because if there is no boss 140 unfitting with the corresponding position after the laser passes through the thinned zone 1101 in the middle of the bottom 110 of the housing 11, welding perforation may occur, which is not conducive to improving the welding yield. In addition, if the area of the end surface of the convex end of the boss 140 is excessively large, it may cause deformation of the current collector plate due to external force, and the deformation of the current collector plate causes unfitted welding. The end surface of the boss 140 does not fit with the outer surface of the thinned zone 1101, so that a large gap is created, and the large gap leads to laser welding perforation of the housing after electrical connection, which is not conducive to improving the welding yield.

For example, the ratio of the projection area of the convex end of the boss 140 to the projection area of the thinned zone 1101 is within a range defined by any two values of 0.6:1, 0.7:1, 0.8:1, 0.9:1, and 0.98:1. This helps to further improve the welding yield at the bottom of the battery.

In some example embodiments, the thickness of the main body zone 1102 is T₁ (the distance shown as a in FIG. 3). It should be noted that in this application, the thickness of the main body zone 1102 refers to the thickness of the non-thinned zone on the bottom 110 of the housing (the initial thickness of the bottom of the housing). The thickness of the thinned zone 1101 is T₂ (the distance shown as b in FIG. 3), and the thickness of the boss 140 is T₀, where T₀ ≥ (T₁ - T₂). The thickness of the boss 140 refers to a distance between the bottom and the top of the boss 140 in the axial direction of the secondary battery. Controlling the thickness of the boss 140 to be greater than the difference between the thickness of the main body zone 1102 and the thickness of the thinned zone 1101 is conducive to improving the welding yield at the bottom of the battery and enhancing the welding reliability at the bottom of the battery.

In some example embodiments, the thickness of the main body zone 1102 is T₁, the thickness of the thinned zone 1101 is T₂, and the thickness of the boss 140 is T₀, satisfying 1.0 ≤ T₀/(T₁ - T₂) ≤ 1.3. Controlling the ratio of the thickness T₀ of the boss 140 to a difference between the thickness T₁ of the main body zone 1102 and the thickness T₂ of the thinned zone within a specified range is conducive to further optimizing the welding yield at the bottom of the battery and enhancing the welding reliability at the bottom of the battery.

For example, the ratio of the thickness T₀ of the boss 140 to the difference between the thickness T₁ of the main body zone 1102 and the thickness T₂ of the thinned zone 1101 is within a range defined by any two values of 1.0, 1.1, 1.2, and 1.3.

In some example embodiments, the end surface of the convex end of the boss 140 has the same shape as the thinned zone 1101, and the end surface of the convex end of the boss 140 fits to one side surface of the thinned zone 1101. This helps to better control the gap between the boss and the thinned zone, thereby further improving the welding yield at the bottom of the battery. For example, in some embodiments of this application, the end surface of the convex end of the boss 140 is circular, rectangular, or annular. In some other example embodiments of this application, the end surface of the convex end of the boss 140 may alternatively be other planar shapes such as triangle or polygon, as long as it can satisfy the foregoing restrictions and improve the welding yield and reliability at the bottom of the battery. This is not limited in this application.

Referring to FIG. 4, a schematic structural diagram of a second implementation of the secondary battery described in this application is shown. In the second implementation, the structure of the secondary battery is substantially the same as that of the first implementation, except that the inner surface of the bottom 110 of the housing is recessed in a direction facing away from the negative electrode current collector plate 14 or recessed in a direction facing away from the positive electrode current collector plate 13 to form the thinned zone 1101. The boss 140 is provided at an end portion of the negative electrode current collector plate 14 or the positive electrode current collector plate 13 close to the thinned zone 1101, and the boss 140 is provided in the same manner as in the first implementation.

The secondary battery described in this application further has a third embodiment (not shown in the figure), which is substantially the same as the structure in the first implementation, except that the inner surface of the bottom 110 of the housing is recessed in a direction facing away from the negative electrode current collector plate 14 or recessed in a direction facing away from the positive electrode current collector plate 13, while the outer surface of the bottom 110 of the housing is recessed in a direction facing the negative electrode current collector plate 14 or recessed in a direction facing the positive electrode current collector plate 13. In other words, both the inner surface and the outer surface of the bottom 110 of the housing are recessed to form the thinned zone 1101. The boss 140 is provided at an end portion of the negative electrode current collector plate 14 or the positive electrode current collector plate 13 close to the thinned zone 1101, and the boss 140 is provided in the same manner as in the first implementation.

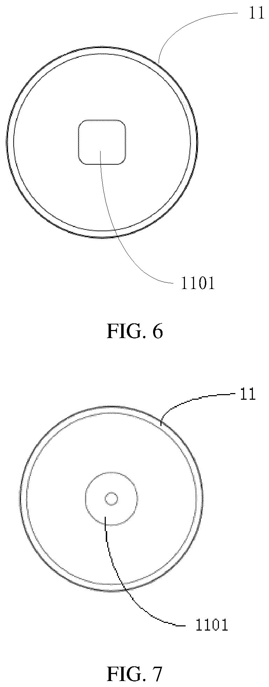

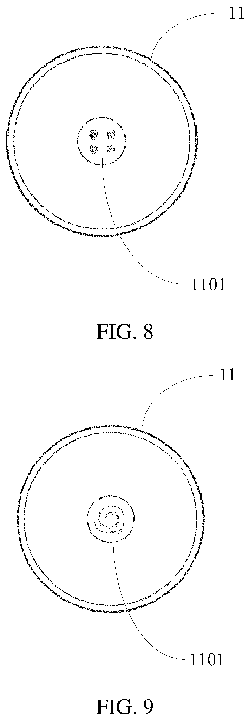

Referring to FIG. 5 to FIG. 7, in some embodiments of this application, a center point of the thinned zone 1101 is located on the central axis of the bottom surface of the housing 11. A shape of the thinned zone 1101 may be selected from any one of circle, rectangle, or ring. Referring to FIG. 8 and FIG. 9, the thinned zone 1101 and the negative electrode current collector plate 14 or the positive electrode current collector plate 13 are welded by penetration welding. The welding morphology may be selected from any one of spot welding, line welding, or spiral welding. In some other embodiments of this application, the center point of the thinned zone 1101 may be located at another position on the bottom surface of the housing 11, and a shape of the thinned zone 1101 may alternatively be selected from any one of triangle or polygon, as long as it can improve the welding yield at the bottom and enhance the welding reliability. This is not limited in this application.

### Cylindrical secondary battery

The cylindrical secondary battery includes a housing and a jelly roll. The bottom of the housing is provided with a thinned zone. The jelly roll includes an electrode plate, where the electrode plate may be a positive electrode plate or a negative electrode plate. In some embodiments of this application, the electrode plate is a positive electrode plate, and the positive electrode plate has a bare foil zone provided at one end portion along the axial direction of the secondary battery. A flattened surface obtained by flattening the bare foil zone is electrically connected to a positive electrode current collector plate. Alternatively, in some other embodiments of this application, the electrode plate is a negative electrode plate, and the negative electrode plate has a bare foil zone provided at one end portion along the axial direction of the secondary battery. The flattened surface obtained by flattening the bare foil zone is electrically connected to a negative electrode current collector plate. The positive electrode current collector plate or the negative electrode current collector plate is electrically connected to the thinned zone.

The axial direction of the secondary battery refers to a length direction of the secondary battery. With reference to FIG. 1, the length direction of the secondary battery refers to a direction from a bottom end to a top end of the housing or from the top end to the bottom end of the housing of the secondary battery.

### Electronic device

The electronic device includes any of the foregoing secondary batteries. The electronic device of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following will further describe this application with reference to specific embodiments.

### Example 1

### Preparation of cell assembly

A positive electrode plate, a negative electrode plate, and a separator were wound to form a jelly roll 12. The positive electrode plate was provided with a first bare foil zone, and the negative electrode plate was provided with a second bare foil zone. The first bare foil zone and the second bare foil zone were respectively located at the two ends of the jelly roll 12. The first bare foil zone and the second bare foil zone were flattened using a flattening device to form a first flattened surface and a second flattened surface, respectively. The first flattened surface was electrically connected to a positive electrode current collector plate 13, and the second flattened surface was electrically connected to a negative electrode current collector plate 14. The negative electrode current collector plate 14 was provided with a boss 140 on a side facing away from the second flattened surface, and parameters of the boss 140 are shown in Table 1.

### Preparation of battery housing

A commercially available steel shell of a battery was used as the housing of initial thickness in this application. Parameters of housing diameter, bottom thickness, and bottom area of the initial housing are shown in Table 1. A middle zone of the bottom of the housing of the initial thickness was thinned to form a housing 11 with a thinned zone 1101. Parameters of the thinned zone 1101 are shown in Table 1.

### Preparation of secondary battery

The prepared cell assembly was placed in the prepared housing 11. The end surface of the convex end of the boss 140 concentrically fits to one side surface of the thinned zone 1101. The thinned zone 1101 was welded to the boss 140 via penetration welding, and the thinned zone 1101 was welded and connected to the negative electrode current collector plate 14. After drying, an electrolyte was injected, and the positive electrode current collector plate 13 at the other end of the jelly roll 12 was welded to a cap. The cap carries a positive charge. Finally, a cover plate and the housing were subjected to end cover sealing via laser welding or clamp sealing to form the secondary battery. Test results are shown in Table 2.

### Examples 2 to 20

These examples differed from Example 1 in that parameters of the initial housing, parameters of the boss 140, and parameters of the thinned zone 1101 were respectively adjusted during the preparation of the cell assembly and the battery housing. The specific parameters are given in Table 1. Test results were shown in Table 2.

### Comparative examples 1 to 3

These examples differed from Example 1 in that parameters of the boss 140 and parameters of the thinned zone 1101 were respectively adjusted during the preparation of the cell assembly and the battery housing. The specific parameters are given in Table 1. Test results were shown in Table 2.

### Test of welding yield at the bottom of the battery

Welding yield at the bottom of the battery = the number of non-defective batteries/total number of batteries.

The number of non-defective batteries refers to the number of batteries in a case where after the jelly roll was placed in the housing, the negative electrode current collector plate was electrically connected to the housing through the thinned zone at the bottom of the housing via bottom penetration welding, and the housing experienced no abnormalities such as welding defects, deformation, cracks, and perforations after electrically connected.

**Table 1**

| Group | Diameter of housing diameter (mm) | Thickness of main body zone (mm) | Area of bottom of housing (mm²) | Area of thinned zone (mm²) | Area of thinned zone/total area of bottom of housing | Thickness of thinned zone (mm) | Thickness of thinned zone/thickness of main body zone | Projection area of convex end of boss/projection area of thinned zone | Ratio of thickness of boss to a difference between thickness of main body zone and thickness of thinned zone |
|---|---|---|---|---|---|---|---|---|---|
| Example 1 | 5.9 | 0.3 | 27.33 | 0.55 | 2% | 0.15 | 50% | 0.95:1 | 1.2 |
| Example 2 | 5.9 | 0.3 | 27.33 | 8.20 | 30% | 0.15 | 50% | 0.95:1 | 1.2 |
| Example 3 | 5.9 | 0.3 | 27.33 | 1.09 | 4% | 0.15 | 50% | 0.95:1 | 1.2 |
| Example 4 | 5.9 | 0.3 | 27.33 | 2.19 | 8% | 0.15 | 50% | 0.95:1 | 1.2 |
| Example 5 | 5.9 | 0.3 | 27.33 | 4.10 | 15% | 0.15 | 50% | 0.95:1 | 1.2 |
| Example 6 | 5.9 | 0.3 | 27.33 | 2.19 | 8% | 0.09 | 30% | 0.95:1 | 1.2 |
| Example 7 | 5.9 | 0.3 | 27.33 | 2.19 | 8% | 0.24 | 80% | 0.95:1 | 1.2 |
| Example 8 | 5.9 | 0.3 | 27.33 | 2.19 | 8% | 0.12 | 40% | 0.95:1 | 1.2 |
| Example 9 | 5.9 | 0.3 | 27.33 | 2.19 | 8% | 0.21 | 70% | 0.95:1 | 1.2 |
| Example 10 | 5.9 | 0.3 | 27.33 | 2.19 | 8% | 0.15 | 50% | 0.6:1 | 1.2 |
| Example 11 | 5.9 | 0.3 | 27.33 | 2.19 | 8% | 0.15 | 50% | 0.98:1 | 1.2 |
| Example 12 | 5.9 | 0.3 | 27.33 | 2.19 | 8% | 0.15 | 50% | 0.95:1 | 1 |
| Example 13 | 5.9 | 0.3 | 27.33 | 2.19 | 8% | 0.15 | 50% | 0.95:1 | 1.3 |
| Example 14 | 12.9 | 0.3 | 130.63 | 10.45 | 8% | 0.15 | 50% | 0.95:1 | 1.2 |
| Example 15 | 12.9 | 0.2 | 130.63 | 10.45 | 8% | 0.1 | 50% | 0.95:1 | 1.2 |
| Example 16 | 12.9 | 0.5 | 130.63 | 10.45 | 8% | 0.25 | 50% | 0.95:1 | 1.2 |
| Example 17 | 5.9 | 0.3 | 27.33 | 2.19 | 8% | 0.075 | 25% | 0.95:1 | 1.2 |
| Example 18 | 5.9 | 0.3 | 27.33 | 2.19 | 8% | 0.255 | 85% | 0.95:1 | 1.2 |
| Example 19 | 5.9 | 0.3 | 27.33 | 2.19 | 8% | 0.15 | 50% | 0.5:1 | 1.2 |
| Example 20 | 5.9 | 0.3 | 27.33 | 2.19 | 8% | 0.15 | 50% | 0.95:1 | 0.8 |
| Comparative example 1 | 5.9 | 0.3 | 27.33 | 0.27 | 1% | 0.15 | 50% | 0.95:1 | 1.2 |
| Comparative example 2 | 5.9 | 0.3 | 27.33 | 8.74 | 32% | 0.15 | 50% | 0.95:1 | 1.2 |
| Comparative example 3 | 5.9 | 0.3 | 27.33 | 0.00 | 0% | 0.3 | 100% | 0.95:1 | 1.2 |

| | | | | | | | | | |
|---|---|---|---|---|---|---|---|---|---|
| Note: "/" in Table 1 indicates a ratio between two values, for example, a ratio of "area of thinned zone/total area of bottom of housing", that is, a proportion of the area of the thinned zone area in the total area of the bottom of the housing. This is applicable to other similar cases. Details are not described herein. | | | | | | | | | |

**Table 2**

| Group | Welding defect rate | Deformation rate | Crack rate | Perforation rate | Welding yield |
|---|---|---|---|---|---|
| Example 1 | 0.18% | 0.00% | 0.01% | 0.00% | 99.81% |
| Example 2 | 0.00% | 0.10% | 0.01% | 0.00% | 99.89% |
| Example 3 | 0.03% | 0.01% | 0.01% | 0.00% | 99.95% |
| Example 4 | 0.00% | 0.00% | 0.01% | 0.00% | 99.99% |
| Example 5 | 0.00% | 0.05% | 0.01% | 0.00% | 99.94% |
| Example 6 | 0.00% | 0.06% | 0.01% | 0.00% | 99.93% |
| Example 7 | 0.00% | 0.00% | 0.15% | 0.00% | 99.85% |
| Example 8 | 0.00% | 0.02% | 0.01% | 0.00% | 99.97% |
| Example 9 | 0.00% | 0.00% | 0.12% | 0.00% | 99.88% |
| Example 10 | 0.00% | 0.00% | 0.01% | 0.03% | 99.96% |
| Example 11 | 0.00% | 0.00% | 0.01% | 0.01% | 99.98% |
| Example 12 | 0.00% | 0.00% | 0.01% | 0.03% | 99.96% |
| Example 13 | 0.00% | 0.00% | 0.01% | 0.00% | 99.99% |
| Example 14 | 0.00% | 0.00% | 0.01% | 0.00% | 99.99% |
| Example 15 | 0.00% | 0.00% | 0.01% | 0.00% | 99.99% |
| Example 16 | 0.00% | 0.00% | 0.01% | 0.00% | 99.99% |
| Example 17 | 0.00% | 0.15% | 0.01% | 0.05% | 99.79% |
| Example 18 | 0.00% | 0.00% | 0.40% | 0.00% | 99.60% |
| Example 19 | 0.00% | 0.00% | 0.00% | 0.25% | 99.75% |
| Example 20 | 0.00% | 0.00% | 0.01% | 0.25% | 99.74% |
| Comparative example 1 | 0.50% | 0.00% | 0.01% | 0.00% | 99.49% |
| Comparative example 2 | 0.00% | 0.28% | 0.01% | 0.00% | 99.71% |
| Comparative example 3 | 0.00% | 0.00% | 0.45% | 0.00% | 99.55% |

With reference to comparison between Comparative examples 1 and 2 and Example 1, the ratio of the area of the thinned zone to the total area of the bottom of the housing in Comparative example 1 is only 1% (lower than the range of 2% to 30% disclosed in this application). In Comparative example 1 the welding defect rate is up to 0.50% during the welding test at the bottom of the battery, resulting in a welding yield of only 99.49%, about 0.32% lower than the welding yield of 99.81% in Example 1. On the other hand, in Comparative example 2, the ratio of the area of the thinned zone to the total area of the bottom of the housing is up to 32% (higher than the range of 2% to 30% disclosed in this application). In Comparative example 2, a deformation rate is up to 0.28% during welding test at the bottom of the battery, resulting in a welding yield of 99.71%, about 0.1% lower than the welding yield in Example 1. It can be seen that the ratio of the area of the thinned zone to the area of the bottom of the housing being within an appropriate range is conducive to improving the welding yield. With reference to comparison between Comparative example 3 and Example 1, the bottom of the housing in Comparative example 3 is not provided with the thinned zone. In Comparative Example 3, the crack rate is up to 0.45% during welding test at the bottom of the battery, resulting in a welding yield of only 99.55%, significantly lower than the welding yield in Example 1 by about 0.26%. It can be seen that the presence of the thinned zone at the bottom of the housing is conducive to improving the welding yield at the bottom of the battery.

With reference to comparison between Comparative examples 17 and 18 and Example 1, the ratio of the thickness of the thinned zone to the thickness of the main body zone in Example 17 is only 25% (lower than the range of 30% to 80% disclosed in this application). In Example 17, the deformation rate is 0.15% and the perforation rate is 0.05% during welding test at the bottom of the battery, resulting in a welding yield of only 99.79%, lower than the welding yield in Example 1. In Example 18, the ratio of the thickness of the thinned zone to the thickness of the main body zone is up to 85% (higher than the range of 30% to 80% disclosed in this application). In Example 18, the crack rate is up to 0.4% during welding test at the bottom of the battery, resulting in a welding yield of only 99.60%, about 0.21% lower than the welding yield in Example 1. It can be seen that the ratio of the thickness of the thinned zone to the thickness of the main body zone being within an appropriate range is conducive to improving welding yield.

With reference to comparison between Comparative example 19 and Example 1, in Example 19, the ratio of the projection area of the convex end of the boss to the projection area of the thinned zone is only 0.5:1 (lower than the range of 0.6:1 to 0.98:1 disclosed in this application), and during welding test at the bottom, the perforation rate is 0.25%, resulting in a welding yield of only 99.75%. It can be seen that the ratio of the projection area of the convex end of the boss to the projection area of the thinned zone being within an appropriate range is conducive to improving the welding yield at the bottom of the battery.

With reference to comparison between Example 20 and Example 1, in Example 20, the ratio of the thickness of the boss to the difference between the thickness of the main body zone and the thickness of the thinned zone is only 0.8 (lower than the range of 1.0 to 1.3 disclosed in this application), and during welding test at the bottom, the perforation rate is 0.25% and the welding yield is only 99.74%. It can be seen that the ratio of the thickness of the boss to the difference between the thickness of the main body zone and the thickness of the thinned zone being within an appropriate range is conducive to improving the welding yield at the bottom of the battery.

Examples 2 to 16 are parallel examples of Example 1. The welding yields in Examples 1 to 16 are all higher than 99.81%, with the highest welding yield up to 99.99%. It can be seen that optimizing the area of the thinned zone and the thickness of the thinned zone and providing an appropriate boss size can further improve the welding yield at the bottom of the battery.

The same or similar reference numerals in the accompanying drawings correspond to the same or similar components. It should be understood that in the description of this application, the orientations or positional relationships indicated by the terms "upper", "lower", "left", "right", and the like are based on the orientations or positional relationships as shown in the accompanying drawings. These terms are merely for the ease and brevity of descriptions of this application rather than indicating or implying that the apparatuses or components mentioned must have specific orientations or must be constructed and manipulated according to specific orientations, and therefore shall not be construed as any limitations on this application. Persons skilled in the art can understand the specific meanings of the foregoing terms based on specific circumstances.

The foregoing descriptions are merely preferable embodiments of this application but are not intended to limit this application. Any modification, equivalent replacement, or improvement made without departing from the spirit and principle of this application shall fall within the protection scope of this application.

## Claims

1. A secondary battery, comprising a housing, an electrode assembly, and a current collector plate, wherein
the current collector plate is electrically connected to the electrode assembly;
the bottom of the housing comprises a main body zone and a thinned zone connecting to the main body zone, and the thinned zone is electrically connected to the current collector plate; and
along a direction perpendicular to the main body zone, a projection area of the thinned zone accounts for 2% to 30% of total area of the bottom of the housing.

2. The secondary battery according to claim 1, wherein the projection area of the thinned zone accounts for 4% to 15% of the total area of the bottom of the housing.

3. The secondary battery according to claim 1, wherein a ratio of thickness of the thinned zone to thickness of the main body zone is 30% to 80%.

4. The secondary battery according to claim 3, wherein the ratio of the thickness of the thinned zone to the thickness of the main body zone is 40% to 70%.

5. The secondary battery according to claim 1, wherein an outer surface of the bottom of the housing is recessed in a direction facing the current collector plate to form the thinned zone; and/or
an inner surface of the bottom of the housing is recessed in a direction facing away from the current collector plate to form the thinned zone.

6. The secondary battery according to claim 5, wherein a boss is provided at one end of the current collector plate facing the bottom of the housing, and the boss fits to the thinned zone.

7. The secondary battery according to claim 6, wherein the boss concentrically fits to the thinned zone.

8. The secondary battery according to claim 6, wherein in an axial direction of the secondary battery, a projection area of a convex end of the boss is smaller than the projection area of the thinned zone.

9. The secondary battery according to claim 8, wherein a ratio of the projection area of the convex end of the boss to the projection area of the thinned zone is 0.6:1 to 0.98:1.

10. The secondary battery according to claim 6, wherein thickness of the main body zone is T₁, thickness of the thinned zone is T₂, and thickness of the boss is T₀, satisfying T₀ ≥ (T₁ - T₂).

11. The secondary battery according to claim 10, satisfying 1.0 ≤ T₀/(T₁ - T₂) ≤ 1.3.

12. The secondary battery according to any one of claims 8 to 11, wherein an end surface of the convex end of the boss has the same shape as the thinned zone and fits to the thinned zone.

13. The secondary battery according to claim 1, wherein the electrode assembly includes an electrode plate;
a bare foil zone is provided at one end of the electrode plate along an axial direction of the secondary battery; and
a flattened surface obtained by flattening the bare foil zone is electrically connected to the current collector plate.

14. The secondary battery according to claim 1, wherein the secondary battery is a cylindrical secondary battery.

15. An electronic device, wherein the electronic device comprises the secondary battery according to any one of claims 1 to 14.
